Europäisches Patentamt

European Patent Office

Office européen des brevets

(19)

(11) **EP 1 376 997 A1**

(12) **EUROPEAN PATENT APPLICATION**

(43) Date of publication:
    **02.01.2004 Bulletin 2004/01**

(51) Int Cl.⁷: **H04M 3/22, H04M 1/24**

(21) Application number: **02360187.5**

(22) Date of filing: **24.06.2002**

(84) Designated Contracting States:
    **AT BE CH CY DE DK ES FI FR GB GR IE IT LI LU
    MC NL PT SE TR**
    Designated Extension States:
    **AL LT LV MK RO SI**

(71) Applicant: **ALCATEL**
    **75008 Paris (FR)**

(72) Inventors:
    • **Walker, Michael**
      **73666 Baltmannweiler 2 (DE)**
    • **Jentsch, Lothar**
      **15370 Fredersdorf (DE)**

(74) Representative: **KOHLER SCHMID + PARTNER**
    **Patentanwälte GbR,**
    **Ruppmannstrasse 27**
    **70565 Stuttgart (DE)**

(54) **Method for testing and adapting an audio unit parameters to a telecommunication system**

(57)    A method of adapting an audio unit to a computer terminal or digital signal processing (=DSP) unit, in particular a telecommunications device, with unknown system parameters, comprises the following steps:

    (a) outputting a test pattern via a sound output unit (12) of the computer terminal or DSP unit;
    (b) receiving the test pattern via a sound input unit (13) of the computer terminal or DSP unit;
    (c) analyzing (3) the received test pattern with an analyzer (16);
    (d) determining the system parameters of the computer terminal or DSP unit based on the results of the analysis;
    (e) adapting operation parameters (5) of the audio unit according to the determined system parameters if the determined system parameters are within admissible operation conditions of the audio unit;
    (f) messaging of the system status if the determined system parameters exceed the admissible operating conditions of the audio unit.

This method facilitates the use of audio units in combination with computer terminals or DSP units when the system parameters are unknown.

Fig. 1

**EP 1 376 997 A1**

**Description**

Background of the invention

The invention relates to a method of adapting an audio unit to a computer terminal or digital signal processing (=DSP) unit, in particular a telecommunications device, with unknown system parameters.

Related methods for adapting an audio unit to known system parameters are disclosed in implementation based on ITU-T Standard H.323 (http://www.telos.de/linux/H323/and http://161.58.151.216/articles/020198_H.323Gatekeepers_MB.html).

In modern telecommunication networks, in particular those used for the transmission of speech such as telephone networks, digital acoustic signals are processed in order to improve the transmission quality and the intelligibility of speech. Often, the digital acoustic signal processing is a prerequisite for useful speech transmission.

The most important methods of signal processing in telecommunications devices are echo cancellation and noise reduction.

Echo cancellation is usually carried out with a combination of a short adaptive finite impulse response (FIR) filter and a non-linear signal processing system, such as a compander. The FIR filter attenuates the main energy of the impulse response within a short time window (10 to 100 ms), whereas the non-linear processing system suppresses the rest energy within a time window of about 100 to 500 ms. However, echo cancellation requires the knowledge of the constant delay time of the telecommunications device in order to be able to compute the echo and subtract it from the outgoing signal.

For noise reduction, noise signals are measured during quiescent periods, i.e. time periods when no party is speaking, and an averaged noise signal is subtracted from the transmitted signal.

In so-called compander methods, signal processing is performed according to a fixed transfer function, sharply reducing the signal level in case of small input signal levels and setting the signal level to a pre-selected standard value ("normal loudness") in case of stronger input signal levels.

The processing of digital acoustic signals in telecommunications devices of the state of the art is performed by audio units, which are specifically designed for the cooperation with a known, standardized telecommunications device. The system parameters of the telecommunications device are fixed and known prior to the installation of the audio unit, so a suitably designed audio unit can be used immediately after its installation. Typical examples for such standardized telecommunications devices are mobile phones and switching centers of radiotelephone networks.

However, there is a growing interest in practising communication via non-standardized telecommunications devices and/or networks, with voice over internet protocol (VOIP) being the most important technique of such kind. Non-standardized telecommunications devices are devices comprising arbitrary hardware components and/or software modules, e.g. a CPU, built-in or plugged-in soundcards, A/D and D/A converters, data buffers, as well as operating systems and telecommunication programs. In particular, personal computers that are used as telecommunication devices or signal processors show an extremely broad variety of hardware and software equipment, varying practically from machine to machine.

In non-standardized telecommunications devices or networks, the local system parameters are most often not known to the user. The use of audio units such as echo cancellation units which require information about the system parameters is therefore very difficult: As a rule, standard digital acoustic signal processing algorithms implemented in audio units fail as soon as the system parameters of the computer terminal or DSP unit, such as the speed of data processing, are out of a narrow standard interval, e.g. due to an intermediate buffering of data. As the state of the art, the operating parameters of audio units to be used in combination with personal computers are typically changed on a trial-and-error basis until a set of functioning operating parameters is found - if such a set exists at all for the local system. This method is rather uncomfortable and thus unacceptable for most users. For this reason, VOIP systems currently do not use echo cancellation or noise reduction, what limits the quality of acoustic signals transmitted over the internet.

The same problems do not only occur with non-standardized telecommunications devices, but with any non-standard system comprising a computer terminal or digital signal processing (DSP) unit for which the use of an audio unit is intended.

Object of the invention

It is the object of the invention to facilitate the use of audio units in combination with computer terminals or DSP units for the purpose of digital acoustic signal processing when the system parameters of the computer terminal of DSP unit, e.g. an echo delay time, are unknown.

Short description of the invention

This object is achieved by a method of adapting an audio unit to a computer terminal or digital signal processing (=DSP) unit, in particular a telecommunications device, with unknown system parameters, comprising the following steps:

    (a) outputting a test pattern, in particular speech, via a sound output unit of the computer terminal or DSP unit;
    (b) receiving the test pattern via a sound input unit of the computer terminal or DSP unit;

(c) analyzing the received test pattern with an analyzer;

(d) determining the system parameters of the computer terminal or DSP unit based on the results of the analysis;

(e) adapting operation parameters of the audio unit according to the determined system parameters if the determined system parameters are within admissible operation conditions of the audio unit;

(f) (f) messaging of the system status if the determined system parameters exceed the admissible operating conditions of the audio unit.

Thus the method starts with a characterization of the system, i.e. the measurement of system parameters of the computer terminal or the DSP unit including any additional devices involved in the signal processing and connected to the computer terminal or DSP device, such as loudspeakers, microphones, D/A or A/D converters, or amplifiers. If an external telecommunication network is also involved, its parameters as far as its signal input and output are involved are acquired, too. The system characteristics also comprise the software, including the operating system, the data processing speed and buffering or interrupt processes. In summary, the system is characterized by its software and hardware properties.

The characteristics of the system provide the necessary information for operating the audio unit. So subsequently, the audio unit is adapted correspondingly. In case that the characteristics of the system make it impossible to run the audio unit as directed, i.e. if the operating parameters are out of range of (or incompatible with) the audio unit, an error message is delivered to the user. The message in accordance with the invention provides information about the critical system characteristics, so that the user may take measures to alter the system in order to make it ready to cooperate with the audio unit. In a simple case, such a message may tell that a certain hardware component of the system (i. e. the computer terminal or DSP unit and any additional devices as mentioned above) is defect or missing. This means the inventive method grants an additional reliability test for the used system components.

Preferably, the above described method is carried out automatically, with the user only starting a routine or just connecting the audio unit with the computer terminal or DSP unit ("plug and play"). This offers a very comfortable handling of the system.

By means of the invention, it is possible to use personal computers and other non-standardized data processing systems for sound and/or speech transmission and, at the same time, use various audio units for processing the digital acoustic signals. In particular, the invention allows to achieve an improved communication quality, in particular intelligibility of speech, over the internet by allowing the use of audio units in cooperation with personal computers connected to the internet. Also, optimal echo cancellation can be achieved for VOIP and VOXDSL.

The invention is particularly useful when operating voice control systems on personal computers. The reliability of state of the art voice control systems can be increased by applying filter systems, in particular noise reduction systems, implemented on audio devices. For barge-in systems, i.e. systems having a speech output and a speech input for controlling a software, the use of echo cancellation units is accessible by the invention. Thus the speech recognition reliability can be increased.

In a preferred variant of the inventive method, the audio unit comprises a modem tone detection unit and/or a speech signal processing unit, in particular an echo cancellation unit, a noise reduction unit, a speech enhancer or a speech codec unit. These are the most common and most useful digital acoustic signal processing devices. In particular, noise reduction units and echo cancellation units have held good in telephone networks and devices, and may serve equally well in personal computers and other non-standard hardware by means of the invention.

A particularly preferred variant of the method is characterized in that the computer terminal or DSP unit is connected to a telecommunications network, in particular processing VOIP (voice over internet protocol) and/or UMTS protocols and/or GSM signals and/or ISDN protocols. The invention provides a simple and comfortable way to establish audio units that have proved to be useful for telephone networks and devices in other telecommunication networks, too, in particular in the internet. Note that the invention may be used to optimize the communication not only for the party performing the inventive method, but also for the party communicated with.

In a further particularly preferred variant of the inventive method, the system parameters comprise echo delay time and/or environment noise and/or echo return loss and/or loop gain and/or loudness of the audio unit and/or microphone sensitivity and/or available computational power and/or required computational power. Knowledge of the echo delay time and the echo return loss allows the subtraction of the echo signal from the input (microphone) signal in an FIR filter unit. Knowledge of the computational power parameters allows the estimation of optimum calculation time in the audio unit and a setting of appropriate buffer sizes, in particular if interrupts are necessary. With the knowledge of loudness and environment noise levels, the overall noise level can be reduced in a processed signal.

In an advantageous variant of the method the echo delay time $t_{delay}$ is determined as follows:

(i) During a time interval $l_1(t) = [-t_p; 0[$, corresponding to sampling parameters k ranging from -P to -1, with $k \in Z$ (k being a whole number) and $P = f_s * t_p$, with $f_s$ being a sampling frequency of the computer terminal or DSP unit, and $t_p$ being a time period of at least the period of the lowest frequency to be computed in the computer terminal or DSP unit, an environment noise parameter ym is determined by

$$ym = S * max \{y(-P), y(-P+1), ... , y(-1) \},$$

with S being a constant scaling factor and y(k) being a signal of the sound input unit during the sampling period k;

(ii) During $l_1$, a signal x(k) of the sound output unit is set to zero;

(iii) During a time interval $l_2$ (t) = [0; $t_{max}$], corresponding to sampling parameters k ranging from 0 to Q, with Q = $f_s$ * $t_{max}$, with $t_{max}$ being a time period of at least the period of the maximum expected delay time to be computed in the computer terminal or DSP unit, the signal x(k) of the sound output unit is set to g(k), with g(k) being a generator signal sequence, wherein the generator signal during at least the first sampling period, g(0), is set to a very high signal amplitude of the sound output unit, preferably to the maximum signal amplitude of the sound output unit, and wherein g(k) is preferably a signal sequence with a high auto correlation function;

(iv) During $l_2$, the signal y(k) of the sound input unit is compared with ym, and the echo delay time $t_{delay}$ is determined as $t_{delay} = k_{delay} / f_s$, wherein $k_{delay}$ is the first sampling period of $l_2$ during which the signal y(k) of the sound input unit exceeds the environment noise parameter ym.

So in the time interval $l_1$, the environment noise is estimated, whereas in time interval $l_2$ the echo delay time is measured. The time interval $l_2$ begins when the generator signal sequence is sent out via the sound output unit. From this moment on, the number of sampling periods is counted until the detected signal at the sound input exceeds the threshold value, i.e. it unambiguously exceeds the environment noise; at this point of time, the generator signal has reached the signal input unit. This number, $k_{delay}$, is directly proportional to the echo delay time via the reciprocal sampling frequency $f_s$, with $f_s$ on the order of 10 kHz. The prior measurement of the environment noise allows a more secure determination of the beginning of the returning generator signal at the sound input unit.

So this variant is a simple way to determine the echo delay time, which works for practically all hardware and software systems. With the echo delay time known, an echo cancellation unit can be provided with the correct pre delay parameters.

In a further development of this method, the generator signal sequence g(k) comprises a Lüke sequence and/or an impulse and/or an impulse sequence or a rectangular function sequence and/or a speech signal. Impulse or impulse sequences are rather simple and easy to generate, whereas a speech signal is very close to the intended acoustic signals to be processed in the normal operation mode. Lüke type sequences have a high autocorrelation function, allowing to determine the delay time with higher accuracy. For this purpose, and in accordance with the invention, the detected signal at the sound input unit is recorded as a whole, together with the time or periods it is registered. The generator signal and the detected signal are then compared by convolution and scanning the phase shift (time shift).

A higher reliability of the determination of the echo delay time can be achieved by means of a variant of the inventive method characterized in that after a first determination of the echo delay time in steps (a) to (d), the echo delay time is subsequently determined again, and if the difference between the two subsequently determined delay times is within a certain threshold, the method is continued with step (e) on the basis of one or both of the two determined delay times, else another determination of the delay time is performed. Thus it is very unlikely that an accidental environment noise is mistaken for the generator signal to be detected. Of course, the reliability can be increased even further by demanding three or even more subsequent similar results of the determination of the echo delay time. The threshold should be on the order of up to a few sampling periods.

It is another preferred variant of the inventive method to repeat steps (a) through (f) during system start or permanently, or during pauses or during reduced computational load of the operating audio unit. If the system parameters are variable during the use of the system or at every system start, it is advantageous to readjust the system parameters as needed. It is particularly preferred to do the readjustment during times when the user is not (or only hardly) disturbed, as it is the case during the system start, during pauses or during reduced computational load.

In a highly preferred variant of the method, steps (a) through (f) are performed prior to the application of the computer terminal or DSP unit and the audio unit as directed. Thus the system is set to its optimum configuration before any digital acoustic payload signals are processed, and the signal processing takes place at the optimum system configuration.

The idea of the invention is also realized in a telecommunication terminal comprising an audio unit, a control unit and a computer terminal or DSP unit, characterized in that the telecommunication terminal is suitable for performing an inventive method as mentioned above. The telecommunication terminal is preferably connected to a telecommunication network and/or other telecommunication devices, and the inventive method is implemented on the telecommunication terminal so it can be run in an automated way.

Also in accordance with the invention is a computer program for operating a telecommunication terminal as mentioned above. The inventive method can be automated in the simplest way by using a computer based control unit (controlling means), having loaded and running the inventive computer program.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawings

The invention is shown in the drawings.

Fig. 1 shows a flowchart of an inventive method of adaptive system control;

Fig. 2 shows the schematic design of parts of an inventive telecommunication terminal.

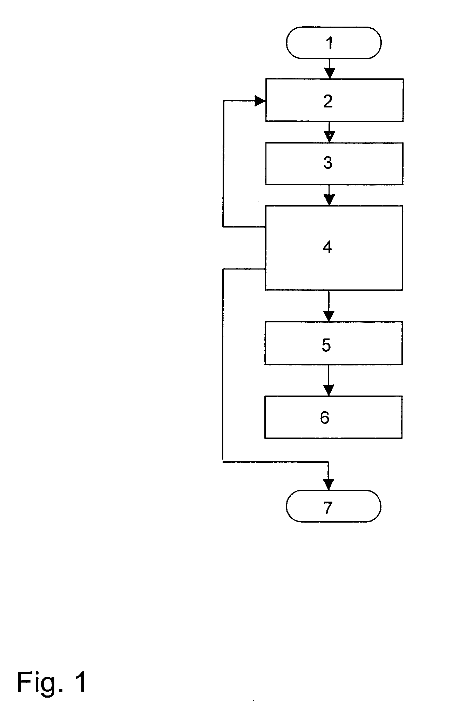

**Figure 1** shows a flowchart of the method of adaptive system control according to the invention. The method begins with start 1. Preferably before or at the start 1, an audio unit is connected to the system (with the system comprising at least a computer terminal or a DSP unit with at least one sound output unit and one sound input unit, and a control unit), although the audio unit is not integrated into the sound signal processing at that time. However, the audio unit tells the system its possible operating conditions. Subsequently, an initialization 2 of the system takes place, involving sending out of a test pattern via the sound output unit. This test pattern is received via the sound input unit, and during an analysis 3, the properties of the test pattern after detection are analyzed. The results of this analysis 3, i.e. the system properties or system parameters, are then classified and used during a control and messaging sequence 4.

In the usual case, operating parameters for the audio unit are calculated from the system parameters, and these operating parameters are used to tune the system 5. After tuning 5, the system is run 6. In the running system, the audio unit is integrated into the sound signal processing. The audio unit may act, for example, to reduce background or environment noise or to cancel echoes.

In case that the system parameters are incompatible with the audio unit, a message is sent to the user during the control and messaging sequence 4, and the method ends 7. The message includes, in accordance with the invention, information about the reasons for the incompatibility of the system with the audio unit, so the user can try to fix any problems that might exist, such as a defect or disconnected hardware device.

In case a higher reliability of the determination of the system parameters is desired, the determination of the system parameters can be repeated after a first determination, and the after a first control and messaging sequence 4 used for recording the results of the first determination, the method returns to the initialization 2 and the sending out of another test pattern. This test pattern may be identical to the first (or any preceding one), but can also be different. When the system parameters are determined with sufficient accuracy after enough repetitions of the determination procedure, or after similar subsequent results, the system is either tuned 5 and run 6, or a message is sent and the method ends 7, as above.

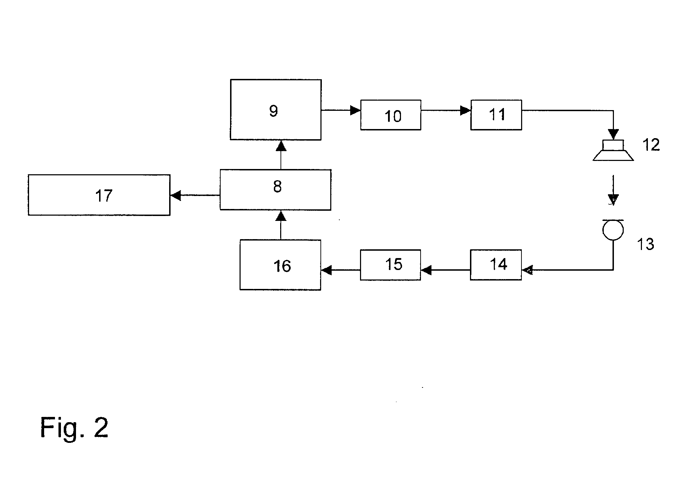

**Figure 2** illustrates parts of a telecommunication terminal in accordance with the invention during the application of the inventive method. A control unit 8 causes a test pattern pool unit 9 to produce a digital test pattern signal. This test pattern signal is then buffered in a first buffer unit 10 until it can be transformed into an analog signal in a digital to analog (D/A) converter 11. From the analog signal an acoustic signal is produced in a sound output unit 12. The sound output part is e.g. a loudspeaker.

Via an acoustic coupling, i.e. sound propagation, the acoustic signal is detected in a sound input unit 13, usually a microphone. This analog signal is transformed into a digital acoustic signal in an analog to digital (A/D) converter 14. After an intermediate buffering in a second buffer unit 15, the signal is analyzed in an analyzer 16. This analysis may include a determination of a signal or echo delay time, an environment noise level, gain factors, microphone sensitivity, an available or required computational power, a buffer size parameterization, etc.. The results of this analysis, i.e. the system parameters, are given to the control unit 8, which classifies these results and calculates operating parameters for an audio unit or gives an error message to the user. This information is given to the user output or system 17.

Of course, the determination of the system parameters can be repeated before any information is provided to the user output or system 17 by ordering the test pattern pool unit 9 to put out another test pattern, and continuing as above. In order to improve the accuracy of the system parameters, the results of a preceding determination are recorded for further evaluation, in particular for a comparison with a subsequent determination. measurements for the determination of the system parameters are repeated until a sufficient or desired accuracy, e.g. by averaging, or reliability, in particular by subsequently obtaining similar results, is achieved.

**Claims**

1. Method of adapting an audio unit to a computer terminal or digital signal processing (=DSP) unit, in particular a telecommunications device, with unknown system parameters,
comprising the following steps:

(a) outputting a test pattern, in particular speech, via a sound output unit (12) of the computer terminal or DSP unit;

(b) receiving the test pattern via a sound input unit (13) of the computer terminal or DSP unit;

(c) analyzing (3) the received test pattern with an analyzer (16);

(d) determining the system parameters of the computer terminal or DSP unit based on the results of the analysis;

(e) adapting operation parameters (5) of the audio unit according to the determined system parameters if the determined system parameters are within admissible operation conditions of the audio unit;

(f) messaging of the system status if the determined system parameters exceed the admissible operating conditions of the audio unit.

2. Method according to claim 1, **characterized in that** the audio unit comprises a modem tone detection unit and/or a speech signal processing unit, in particular an echo cancellation unit, a noise reduction unit, a speech enhancer or a speech codec unit.

3. Method according to claim 1, **characterized in that** the computer terminal or DSP unit is connected to a telecommunications network, in particular processing VOIP (voice over internet protocol) and/or UMTS protocols and/or GSM signals and/or ISDN protocols.

4. Method according to claim 1, **characterized in that** the system parameters comprise echo delay time and/or environment noise and/or echo return loss and/or loop gain and/or loudness of the audio unit and/or microphone sensitivity and/or available computational power and/or required computational power.

5. Method according to claim 4, **characterized in that** the echo delay time $t_{delay}$ is determined as follows:

(i) During a time interval $I_1(t) = [-t_p; 0[$, corresponding to sampling parameters k ranging from -P to -1, with $k \in Z$ and $P = f_s * t_p$, with $f_s$ being a sampling frequency of the computer terminal or DSP unit, and $t_p$ being a time period of the maximum expected delay time of the computer terminal or DSP unit, an environment noise parameter ym is determined by

$$ym = S * \max \{y(-P), y(-P+1),..., y(-1)\},$$

with S being a constant scaling factor and y(k) being a signal of the sound input unit during the sampling period k;

(ii) During $I_1$, a signal x(k) of the sound output unit is set to zero;

(iii) During a time interval $I_2(t) = [0; t_{max}]$, corresponding to sampling parameters k ranging from 0 to Q, with $Q = f_s * t_{max}$, with $t_{max}$ being a time period of at least the period of the maximum expected delay time to be computed in the computer terminal or DSP unit, the signal x(k) of the sound output unit is set to g(k), with g(k) being a generator signal sequence, wherein the generator signal during at least the first sampling period, g(0), is set to a very high signal amplitude of the sound output unit, preferably to the maximum signal amplitude of the sound output unit, and wherein g(k) is preferably a signal sequence with a high auto correlation function;

(iv) During $I_2$, the signal y(k) of the sound input unit is compared with ym, and the echo delay time $t_{delay}$ is determined as $t_{delay} = k_{delay} / f_s$, wherein $k_{delay}$ is the first sampling period of $I_2$ during which the signal y(k) of the sound input unit exceeds the environment noise parameter ym.

6. Method according to claim 5, **characterized in that** the generator signal sequence g(k) comprises a Lüke sequence and/or an impulse and/or an impulse sequence or a rectangular function sequence and/or a speech signal.

7. Method according to claim 1, **characterized in that** after a first determination of the echo delay time in steps (a) to (d), the echo delay time is subsequently determined again, and if the difference between the two subsequently determined delay times is within a certain threshold, the method is continued with step (e) on the basis of one or both of the two determined delay times, else another determination of the delay time is performed.

8. Method according to claim 1, **characterized in that** steps (a) through (f) are repeated during system start or permanently, or during pauses or during reduced computational load of the operating audio unit.

9. Method according to claim 1, **characterized in that** steps (a) through (f) are performed prior to the application (6) of the computer terminal or DSP unit and the audio unit as directed.

10. Telecommunication terminal, comprising an audio unit, a control unit (8) and a computer terminal or DSP unit, **characterized in that** the telecommunication terminal is suitable for performing a method according to claim 1.

**11.** Computer program for operating a telecommunication terminal according to claim 10.

Fig. 1

Fig. 2

**European Patent Office**

## EUROPEAN SEARCH REPORT

Application Number

EP 02 36 0187

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 856 961 A (BRITISH TELECOMM) 5 August 1998 (1998-08-05) * page 3, line 15 - line 27 * * page 4, line 16 - page 8, line 6 * * figures 1,2,7A,7B * --- | 1-11 | H04M3/22 H04M1/24 |
| A | US 6 201 960 B1 (HEIKKIL AUML PER GUNNAR ET AL) 13 March 2001 (2001-03-13) * column 1, line 1 - line 43 * * figure 1 * ----- | 1-11 | |

TECHNICAL FIELDS
SEARCHED       (Int.Cl.7)

H04M

The present search report has been drawn up for all claims

| Place of search | Date of completion of the search | Examiner |
|---|---|---|
| THE HAGUE | 15 January 2003 | Larcinese, A |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

10

## ANNEX TO THE EUROPEAN SEARCH REPORT
## ON EUROPEAN PATENT APPLICATION NO.

EP 02 36 0187

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2003

| Patent document cited in search report | | Publication date | Patent family member(s) | | Publication date |
|---|---|---|---|---|---|
| EP 0856961 | A | 05-08-1998 | EP | 0856961 A2 | 05-08-1998 |
| | | | AU | 670950 B2 | 08-08-1996 |
| | | | AU | 4350093 A | 24-01-1994 |
| | | | CA | 2137005 A1 | 06-01-1994 |
| | | | DE | 69321590 D1 | 19-11-1998 |
| | | | DE | 69321590 T2 | 01-04-1999 |
| | | | EP | 0647375 A1 | 12-04-1995 |
| | | | ES | 2122021 T3 | 16-12-1998 |
| | | | WO | 9400922 A1 | 06-01-1994 |
| | | | HK | 1014403 A1 | 14-07-2000 |
| | | | JP | 8501910 T | 27-02-1996 |
| | | | SG | 48927 A1 | 18-05-1998 |
| | | | US | 5621854 A | 15-04-1997 |
| | | | AU | 677401 B2 | 24-04-1997 |
| | | | AU | 6974694 A | 17-01-1995 |
| | | | CA | 2161257 A1 | 05-01-1995 |
| | | | DE | 69421704 D1 | 23-12-1999 |
| | | | DE | 69421704 T2 | 08-06-2000 |
| | | | EP | 0705501 A1 | 10-04-1996 |
| | | | WO | 9501011 A1 | 05-01-1995 |
| | | | JP | 8511672 T | 03-12-1996 |
| | | | SG | 47542 A1 | 17-04-1998 |
| | | | US | 5999900 A | 07-12-1999 |
| | | | US | 5890104 A | 30-03-1999 |
| US 6201960 | B1 | 13-03-2001 | AU | 7950598 A | 04-01-1999 |
| | | | BR | 9810326 A | 05-09-2000 |
| | | | WO | 9859509 A1 | 30-12-1998 |

For more details about this annex : see Official Journal of the European Patent Office, No. 12/82